# EUROPÄISCHE PATENTSCHRIFT

(11) **EP 1 600 749 B1**
(45) Veröffentlichungstag und Bekanntmachung des Hinweises auf die Patenterteilung: **13.12.2006**
(21) Anmeldenummer: 05011412.3
(22) Anmeldetag: 26.05.2005
(51) Int. Cl.: G01K 1/02, G01K 3/12, F24J 3/08, G01V 9/00, E21B 47/06

(54) **Verfahren und Vorrichtung zur Messung der Temperatur oder anderen Grössen in einer U-förmigen Erdwärmesonde sowie Ausspülanordnung dafür**
Method and device for measuring the temperature or another quantity in a U-shaped geothermal probe and flushing device therefor
Méthode et dispositif pour mesurer la température ou une autre grandeur dans une sonde géometrique ayant la forme d'un U et système pour chasser ledit dispositif

(30) Priorität: 29.05.2004 DE 102004026381
(43) Veröffentlichungstag der Anmeldung: 30.11.2005
(73) Patentinhaber: Geowatt AG, 8050 Zürich (CH)
(72) Erfinder: Rohner, Ernst, 9212 Arnegg (CH); Rybach, Ladislaus, 8700 Küsnacht (CH); Schärli, Ulrich, 8049 Zürich (CH)
(74) Vertreter: Hansen, Jochen

(56) Entgegenhaltungen:
- US-A- 3 122 016
- US-A- 3 800 595
- US-A- 3 807 227

## Beschreibung

Die Erfindung betrifft ein Verfahren zur Messung der Temperatur oder anderen geophysikalischen Größen mit einer kabellosen Bohrlochsonde in mit Flüssigkeit, insbesondere Wasser, gefüllten, U-förmigen Erdwärmesonden. Ferner betrifft die Erfindung eine Bohrlochsonde für Messung der Temperatur oder anderen Größen in mit Flüssigkeit, insbesondere Wasser, gefüllten U-förmigen Erdwärmesonden, mit einem druckfesten Gehäuse und darin angeordnet wenigstens einem Sensor zur Messwerterfassung, insbesondere Temperatursensor, wenigstens einem Drucksensor, einem Zeitgeber, wenigstens einem Datenspeicher sowie einer internen Stromversorgung. Ferner betrifft die Erfindung eine Ausspülanordnung mit einer Auffangvorrichtung zum Auffangen der Bohrlochsonde beim Ausspülen.

Herkömmliche Bohrlochmesssonden, die kabelgebunden in ein Bohrloch abgesenkt werden, sind in unterschiedlichsten Ausführungen im Bereich der Bohrlochmesstechnik bekannt (siehe z.B. US 3,807,227). Dabei sind auch kabelgeführte Messsonden mit einem Druckaufnehmer und einem Temperaturaufnehmer bekannt.

Ferner sind zur Nutzung der thermischen Eigenschaften des Untergrundes Bohrlochwärmetauschersysteme für Gebäudeheizung und -kühlung bekannt, die in Form von U-förmigen Erdwärmesonden in ein Bohrloch eingeführt und der freie Platz im Bohrloch von unten nach oben mit Füllmaterial verfüllt werden. Beispielsweise ist von der Firma Haka Gerodur AG, Mooswiesstraße 67, CH-9200 Gossau, SG ein Doppel-U-Rohr-Bohrlochwärmetauscher als sog. Erdwärmesonde bekannt.

Für die Auslegung derartiger Wärmetauscher zum Speichern von thermischer Energie im Untergrund oder als Erdwärmequelle für Wärmepumpen ist die Kenntnis über die thermischen Eigenschaften des Untergrundes besonders wichtig. Die ganz entscheidende Größe ist die Wärmeleitfähigkeit des Untergrundes beim Wärmeaustausch. Mit einem Temperatur-Tiefenprofil kann der geothermische Gradient und dessen Variation mit der Tiefe gemessen werden. Da beim Einsatz von Erdwärmesonden der Wärmeaustausch zwischen Erdwärmesonde und dem umgebenden Erdreich direkt von der Wärmeleitfähigkeit des Untergrundes am Standort abhängt, kann durch eine genaue Bestimmung der Wärmeleitfähigkeit des Untergrundes schnell eine Aussage über die spezifische Entzugsleistung (Watt pro Meter Bohrlänge) und über die notwendige Anordnung und Tiefe der Erdwärmesondenanlage getroffen werden.

Temperatur-Tiefenprofile wurden bisher mit kabelgebundenen Bahrlochmesssonden im offenen Bohrloch erstellt. Dabei kann jedoch sowohl aus Kostengründen wie auch aus Bohrlochstabilitätsgründen die Bohrlochabkühlung meist nicht abgewartet werden, womit systematische Messfehler entstehen. Ferner weist ein Bohrloch, das beispielsweise für die Einführung einer Erdwärmesonde vorgesehen ist, einen größeren Durchmesser auf (häufig 135 mm), so dass interne Zirkulationen der Bohrlochflüssigkeit im Bohrloch möglich sind und das Messergebnis verfälschen. Ferner ist bei der herkömmlichen kabelgebundenen Bohrlochmesstechnik problematisch, dass schwache Messsignale von elektromagnetisch eingestreuten Störsignalen überdeckt werden. Folglich kann eine hohe Messauflösung bei der Temperaturmessung nicht oder nur mit erheblichem Aufwand erreicht werden,

Um eine zeitliche Abstimmung der Temperaturmessung auf die Bohrlochabkühlung zu ermöglichen, ist daher eine Messung innerhalb der Erdwärmesonde, also in dem Bohrlochwärmetauscher vorzuziehen. Da sich jedoch beim Einbau die U-förmigen Erdwärmesonden üblicherweise spiralförmig verdrehen, ist eine Messung mit einer kabelgebundenen Bohrlochsonde in größeren Tiefen nicht möglich. Bereits ab 60 m Tiefe erhöht sich beim Aufholen der Bohrlochsonde die Reibungskraft zwischen Kabel und Erdwärmesondenwandung, an dem das Kabel zwangsläufig durch die spiralförmige Anordnung der Verrohrung anliegt, so stark, dass das Messgerät nicht mehr aufgeholt werden kann, es also quasi verseilt.

Entsprechend wurde ein alternatives Messverfahren zur Bestimmung der Wärmeleitfähigkeit des Untergrundes in "Thermal response test - Experiences in Germany", Burkhard Sanner et al. 2000 beschrieben, bei dem in einem Pumptest eine vorgegebene Wärmemenge in den Bohrlochwärmetauscher (Erdwärmesonde) eingebracht wird und die daraus resultierenden Temperaturänderungen der zirkulierenden Flüssigkeit gemessen werden. Bei diesem Verfahren kann jedoch eine differenzierte Auflösung in verschiedenen Tiefenlagen entsprechend unterschiedlicher geologischer Informationen nicht erreicht werden. Ein brauchbares Resultat liefert der Response-Test erst ab 50 h Zirkulationszeit, was viel zu lange für den Baustellenbetrieb ist.

Aufgabe der Erfindung ist es daher, ein Messverfahren und eine Messvorrichtung anzugeben, mit dem bzw. mit der eine hochauflösende Messung der Temperatur oder anderen Größen in einer Erdwärmesonde (Bohrlochwärmetauscher) innerhalb kurzer Zeit möglich ist.

Gelöst wird diese Aufgabe mit einem Messverfahren nach Anspruch 1. Vorrichtungsgemäß wird die Aufgabe mit einer Bohrlochsonde gemäß Anspruch 8 gelöst. Die Ausspülanordnung gemäß Anspruch 12 gibt ein Hilfsmittel zur Ausführung des Messverfahrens an.

Durch das Verwenden einer kabellosen Bohrlochsonde, sog. Fischsonde, und die Abstimmung ihres Gewichts zur von dieser Sonde verdrängten Flüssigkeit wird ein freies und langsames Absinkenlassen der Bohrlochsonde bis zum U-förmigen Fuß der Erdwärmesonde ermöglicht. Durch Starten des Messaufnahmeprogramms vor dem Einführen der Bohrlochsonde in einen Strang der U-förmigen Erdwärmesonde werden dann beim freien Absinken der Bohrlochsonde Druckmessdaten mit zugehörigen Sensordaten, wie z. B. Temperaturmesswerten aufgenommen. Dabei beträgt der Zeitaufwand weniger als 50 Minuten für eine 300 m lange Erdwärmesonde.

Dadurch, dass die kabellose Bohrlochsonde nur ein geringfügig größeres Gewicht als die durch das Gehäuse verdrängte Flüssigkeit hat, lässt sich die am U-förmigen Fuß der Erdwärmesonde aufstehende Bohrlochsonde durch Druckbeaufschlagung des anderen Stranges der U-förmigen Erdwärmesonde ausspülen. Dabei kann die Druckbeaufschlagung mit geringem Aufwand mit einer kleinen Jetpumpe durchgeführt werden (Zeitaufwand ca. 1 Minute pro 100 m).

Die dafür vorgesehene Ausspülanordnung weist bevorzugt eine Auffangvorrichtung auf bestehend aus einem oben offenen Auffangvolumen, das auf einem Strang der U-förmigen Erdwärmesonde aufsetzbar ist. Im unteren Abschnitt des Auffangvolumens ist dabei eine Saugleitung angeschlossen, die die in der Erdwärmesonde befindliche Flüssigkeit einer Pumpe zuführt, dessen Druckleitung an den anderen Strang der U-förmigen Erdwärmesonde angeschlossen ist. Bei Betätigung der Pumpe wird entsprechend eine Gegenströmung erzeugt, die die am U-förmigen Fuß der Erdwärmesonde aufliegende Bohrlochsonde nach oben in das oben offene Auffangvolumen zurückfördert oder ausspült, so dass die Sonde aus dem Auffangvolumen manuell entnommen werden kann.

Das Temperaturmessverfahren kann beispielsweise als zeitgesteuerte Messung durchgeführt werden; wobei die Aufzeichnung eines Temperaturmesswertes von der Zeit gesteuert wird. Dabei werden in bevorzugt gleichen, vorbestimmten Zeitabständen die Temperaturmesswerte abgespeichert.

Dadurch, dass die Temperatur temperaturabhängig, bevorzugt in gleichen, vorbestimmten Temperaturintervallen, aufgezeichnet wird, werden die abzuspeichernden Messwerte reduziert, ohne dabei die Aussagekraft der Messung zu verschlechtern. Bevorzugt wird in gleichen, vorbestimmten Temperaturintervallen aufgezeichnet.

Alternativ kann die Temperatur druckabhängig, bevorzugt in gleichen, vorbestimmten Druckintervallen, aufgezeichnet werden, wobei bevorzugt der Druck in gleichen, kurzen Zeitintervallen gemessen wird und die dabei gemessene Temperatur nur aufgezeichnet wird, wenn die Druckänderung einen vorbestimmten Schwellwert (Δp) überschritten hat. Auch mit dieser Messmethode kann die abzuspeichernde Datenmenge wirksam und ohne Verminderung der Aussagekraft der Messungen reduziert werden.

Die kurzen Zeitintervalle entsprechen dabei bei digitaler Verarbeitung der Messdaten einer vorbestimmten Abtastrate, beispielsweise von 1 Sekunde bis 255 Sekunden, in denen die Signale der Messwertempfänger immer wieder abgetastet werden und je nach gewähltem Messverfahren unmittelbar abgespeichert (zeitabhängige Temperaturmessung), mit einem vorbestimmten Temperaturschwellwert (ΔT) verglichen und nur bei Überschreitung des Schwellwertes abgespeichert (temperaturabhängige Messung) oder nach Vergleich mit dem vorbestimmten Druckschwellwert (Δp) nur bei Überschreiten des Schwellwertes (druckabhängige Messung) abgespeichert werden.

Wenn neben der Temperatur die Zeit und der Druck aufgezeichnet werden, stehen zu den Temperaturmessungen zeitparallel erfasste Größen, nämlich die Zeit und der Druck bereit, die eine Orientierung, d. h. zeitliche Einordnung des Messereignisses und Tiefenzuordnung über den Druck ermöglichen.

Um ein erwünscht langsames freies Absinken der Bohrlochsonde in einem Strang der U-förmigen Erdwärmesonde auch bei unterschiedlichen Temperaturen, Inhaltsstoffen der Flüssigkeitsfüllung, etc. erreichen zu können, mithin Änderungen der Dichte der Flüssigkeit ausgleichen zu können, sind bevorzugt Justiergewichte zur bedarfsweisen Befestigung am Gehäuse der Bohrlochsonde vorgesehen.

Um eine hermetisch von der Flüssigkeitsfüllung der U-förmigen Erdwärmesonde abgetrenntes Innenleben der Bohrlochsonde zu erhalten, ist im Gehäuse wenigstens ein magnetisch von der Außenseite betätigbarer Schalter zur Steuerung der Bohrlochsonde vorgesehen. Mit diesem Schalter läßt sich beispielsweise das Messaufnahmeprogramm der Bohrlochsonde auch bei vollständig zusammengebauter Sonde aktivieren bzw. deaktivieren. Mit örtlich unterschiedlich angebrachten Schaltern könnte beispielsweise auch die Messmethode ausgewählt oder Schwellwerte eingegeben werden.

Über eine Schnittstelle können nach Anschluss eines Rechners die in der Bohrlochsonde im Datenspeicher abgelegten Messdaten zur weiteren Verarbeitung auf dem Rechner übertragen werden. Die Schnittstelle ist dabei bevorzugt unmittelbar auf der elektrischen Schaltung der Sonde vorgesehen, so dass zum Auslesen der Daten das Sondengehäuse geöffnet werden muss. Alternativ ist auch eine druckfeste und flüssigkeitsdichte Datensteckdose an der Außenseite der Bohrlochsonde denkbar, oder eine Schnittstelle mit drahtloser Technologie.

Nachfolgend wird ein Ausführungsbeispiel der Bohrlochsonde sowie die Ausspülanordnung anhand der beiliegenden Zeichnungen detailliert beschrieben.

Darin zeigt:
- Fig. 1: eine teils geschnittene Darstellung der kabellosen Bohrlochsonde,
- Fig. 2: ein Blockschaltbild der Bohrlochsonde und
- Fig. 3: eine schematisierte Darstellung eines Bohrlochs mit Erdwärmesonde und angeschlvssener Ausspülanordnung.

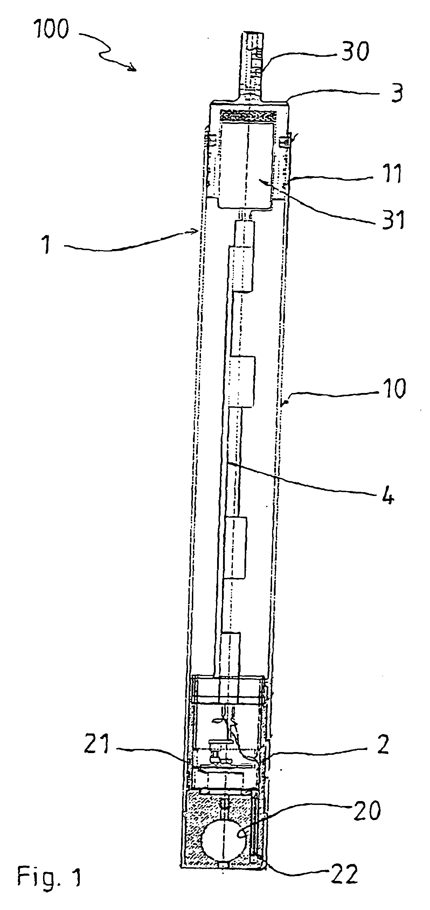

In Fig. 1 ist ein Ausführungsbeispiel einer Bohrlochsonde 100 teils geschnitten dargestellt. Die Bohrlochsonde 100 weist ein druckfestes Gehäuse 1 auf. Das Druckgehäuse 1 setzt sich zusammen aus einem Zwischenrohr 10, einem am oberen Ende des Zwischenrohrs 10 angeordneten Batteriegehäuse 3 und einem am unteren Ende des Zwischenrohrs 10 angeordneten Messkopf 2 zusammen. Das Batteriegehäuse 3 und der Messkopf 2 sind jeweils mit doppelter O-Ringdichtung 11 in dem Zwischenrohr 10 bis zu einem Außendruck von 100 bar und Temperaturen bis 50 °C abgedichtet.

In dem Messkopf 2 sind ein Keramikdrucksensor 21 sowie ein Temperatursensor 22 untergebracht. Sowohl das Batteriegehäuse 3 wie auch der Messkopf 2 weisen Handhabungsösen 30 bzw. 20 auf, in die ein gesondertes, hier nicht dargestelltes Austreibwerkzeug zum Austreiben des Batteriegehäuses 3 bzw. des Messkopfes 2 aus dem Zwischenrohr 10 zum Öffnen des Gehäuses 1 der Bohrlochsonde 100 vorgesehen ist. Der Werkstoff der Handhabungsöse 20 ist gleichzeitig als thermische Isolation ausgebildet.

Im Batteriegehäuse 3 ist zur Stromversorgung der Bohrlochsonde 100 eine Batterie 31 eingesetzt. Im Zwischenrohr 10 ist zwischen dem Batteriegehäuse 3 und dem Messkopf 2 eine elektrische Schaltung 4 untergebracht.

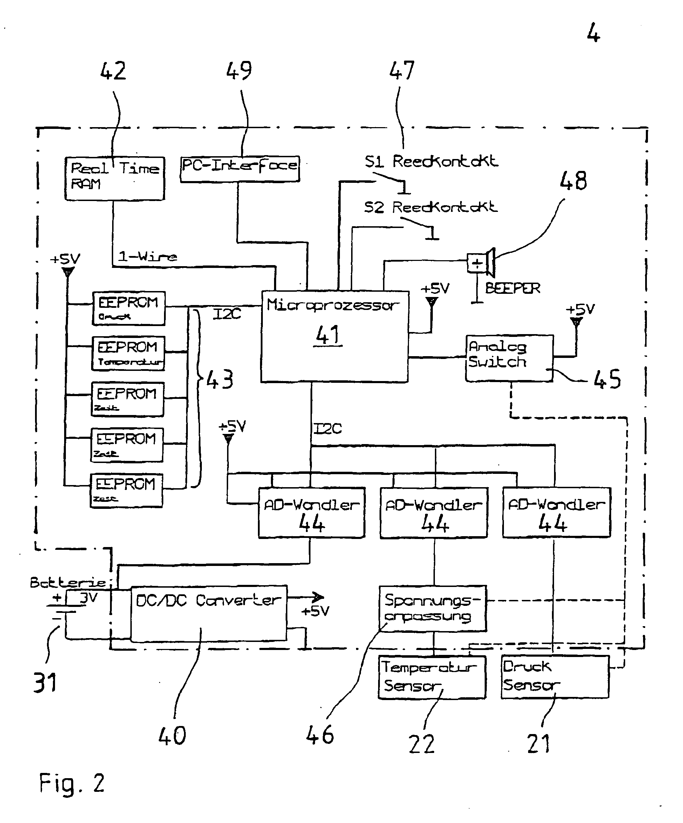

In Fig. 2 ist ein Blockschaltbild der Bohrlochsonde 100 dargestellt. Darauf sind die auf der elektrischen Schaltung 4 verwirklichten Komponenten in dem strichpunktierten Rahmen aufgeführt. Die zur Stromversorgung vorgesehene Batterie 31 ist links unten dargestellt. Rechts unten ist der Temperatursensor 22 sowie der Drucksensor 21 dargestellt.

Die elektrische Schaltung 4 weist einen DC/DC-Konverter 40 zur Bereitstellung einer Gleichspannung von 5 V; einen Mikroprozessor 41; eine Zeitbasis oder Real-Time RAM 42; fünf parallel geschaltete Speicherelemente oder EEPROM's 43 zur Speicherung der aufzuzeichnenden Daten, nämlich Druck (p), Temperatur (T) und dreimal die Zeit (t₁, t₂, t₃); drei Analog/Digital-Wandler 44; einen Analogschalter 45 mit Spannungsanpassung 46; zwei Reedkontakte 47; einen Akustiksignalgeber oder Beeper 48 und eine RS232-Schnittstelle 49 zum Anschluss eines Rechners auf.

Der Analog/Digital-Wandler 44 für den Temperatursensor 22 weist eine 16 Bit-Auflösung auf, so dass eine Temperaturauflösung von + /- 0,0015 °C realisierbar ist. Dabei kommt ein Typ ADS1100 von Texas Instruments zum Einsatz. Die Batterie 31 ist eine Lithiumbatterie vom Typ CR14250. Selbstverständlich können auch andere leistungsstarke Analog/Digital-Wandler und Batterien verwendet werden.

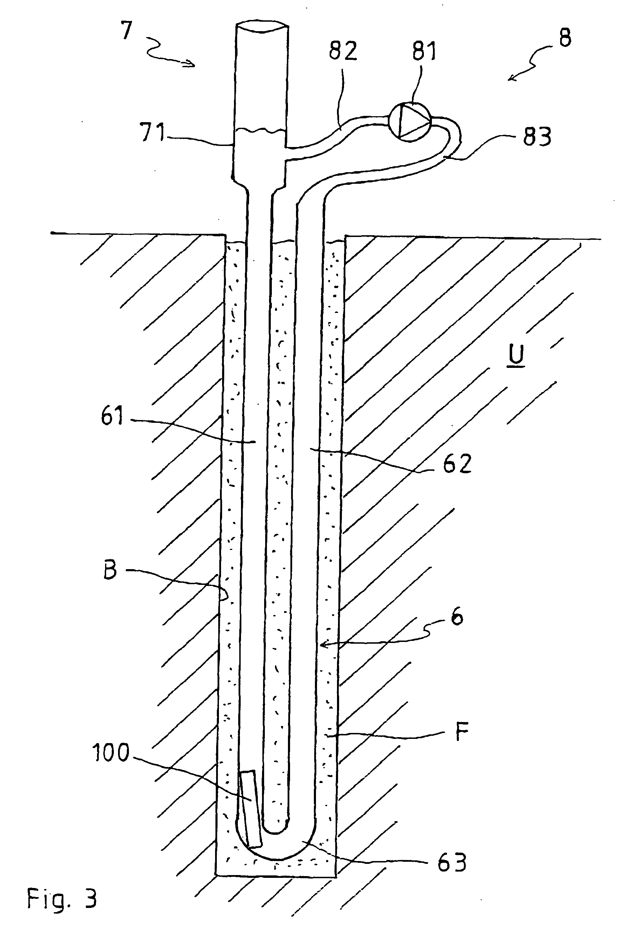

In Fig. 3 ist in einem schematischen Schnitt ein im Untergrund U eingebrachtes Bohrloch B dargestellt. In dem Bohrloch B ist eine Erdwärmesonde 6 in Form eines U-förmigen Bohrlochwärmetauscherrohres eingebracht. In Fig. 3 ist der Übersichtlichkeit halber die Erdwärmesonde 6 nicht in sich verdreht dargestellt. Tatsächlich sind jedoch erster Strang 61 und zweiter Strang 62 der U-förmig ausgebildeten Erdwärmesonde 6 ineinander spiralförmig verdreht ausgebildet.

In dem äußeren Zwischenraum zwischen Erdwärmesonde 6 und Bohrloch B ist ein Füllmaterial F zur thermischen Ankopplung der Erdwärmesonde 6 an den Untergrund U eingefüllt. Am unteren Ende der Erdwärmesonde 6 ist ein U-förmiger Fuß 63 ausgebildet, der den ersten Strang 61 mit dem zweiten Strang 62 verbindet.

Am oberen Ende der Erdwärmesonde 6 ist am ersten Strang 61 eine Auffangvorrichtung 7 aufgesetzt. Die Auffangvorrichtung 7 weist ein oben offenes Auffangvolumen 71 auf, an das im unteren Abschnitt eine Saugleitung 81 einer Ausspülvorrichtung 8 angeschlossen ist. Im Betrieb befindet sich der freie Flüssigkeitsstand etwa auf halber Höhe im Auffangvolumen 71. Die Ausspülvorrichtung 8 weist eine Pumpe 81 auf, an die stromaufwärtig die Saugleitung 82 angeschlossen ist. Stromabwärtig der Pumpe 81 ist eine Druckleitung 83 angeschlossen, die dichtend mit dem zweiten Strang 62 der Erdwärmesonde 6 verbunden ist.

Nachfolgend wird das Messverfahren anhand der Zeichnungen, insbesondere Fig. 3 beschrieben.

Die kabellose Bohrlochsonde 100 wird vor dem Messeinsatz kalibriert und für den Messeinsatz entsprechend konfiguriert. Bei diesem Vorgang ist an der RS232-Schnittstelle 49 der Bohrlochsonde 100 ein normal belegtes serielles RS232-Kabel angeschlossen und mit einem PC verbunden.

Nunmehr können neben Randdaten über die aktuelle Messung, wie beispielsweise Ort und Datum insbesondere der Messmodus, nämlich entweder zeitgesteuerte Messung, druckgesteuerte Messung oder temperaturgesteuerte Messung ausgewählt werden.

Bei einer zeitgesteuerten Messung wird ein festes Zeitintervall zwischen 1 Sekunde und 255 Sekunden ausgewählt. Die Messungen werden dann in dem Zeitintervall entsprechenden Zeitabständen ausgelöst und die Messwerte gespeichert.

Bei der druckgesteuerten Messung wird ein Druckschwellwert (Δp) vorgegeben, wonach nur bei einer Druckänderung ≥ Δp eine Aufzeichnung des jeweiligen Messergebnisses ausgelöst wird.

Bei der temperaturgesteuerten Messung wird ein Temperaturschwellwert (ΔT) vorgegeben, wonach bei Temperaturänderungen ≥ ΔT die jeweiligen Messdaten aufgezeichnet werden.

Dabei legt eine vorwählbare Abtastrate (Δt) fest, in welchen zeitlichen Abständen der Druck oder die Temperatur je nach Wahl des Messmodus abgefragt wird. Bei jeder Abfrage wird die Änderung der Messgröße seit dem letzten gemessenen Wert berechnet und anhand dieser entschieden, ob eine Messung gespeichert wird oder nicht.

Nunmehr wird die Bohrlochsonde zusammengefügt und ist damit druckdicht verschlossen.

Weiter wird zur Vorbereitung der Messung das Gesamtgewicht der Bohrlochsonde 100 an die aktuelle Dichte der in der Erdwärmesonde 6 enthaltenen Flüssigkeit angepasst. Dabei können kleine, in der Zeichnung in Fig. 1 nicht dargestellte Justiergewichte am Gehäuse 1 der Bohrlochsonde 100 angefügt werden, um ein die Auftriebskraft der Bohrlochsonde 100 leicht übersteigendes Gewicht einstellen zu können.

Die als Prototyp gefertigte Bohrlochsonde 100 gemäß Fig. 1 weist eine Länge von 235 mm und eine Durchmesser von 23 mm auf. Die Bohrlochsonde wiegt dabei lediglich 99,8 g. Mit der Sonde können 16.000 Messwerttripel bestehend aus Zeit, Druck und Temperatur aufgenommen werden.

Bevorzugt wird vor Durchführung einer Messung ein Selbsttest durchgeführt, bei dem die Betriebsspannung sowie die Funktionsfähigkeit von Temperatursensor 22 und Drucksensor 21 und die Speicherkapazität der Speicherelemente 43 überprüft werden. Dieser Selbsttest wird durch S1 der Reedkontaktschalter 47 durch Hinhalten eines Magneten an der Außenseite des Gehäuses 1 der Bohrlochsonde 100 an der markierten Stelle "Schalter 1 " ausgelöst. Die entsprechenden Statusmeldungen bei dem Selbsttest werden über den Akustiksignalgeber 48 an den Bediener gegeben.

Wenn nun alles ordnungsgemäß vorbereitet ist, wird die kabellvse Bohrlochsonde 100 durch die auf dem ersten Strang 61 der Erdwärmesonde 6 aufgesetzte Auffangvorrichtung 7 in den ersten Strang 61 der Erdwärmesonde 6 gegeben.

Die Bohrlochsonde 100 taucht in die in der Erdwärmesonde 6 befindliche Flüssigkeit ein und sinkt unter dem gegenüber der Auftriebskraft geringfügig größeren Eigengewicht der Sonde langsam bis zum U-förmigen Fuß 63 der Erdwärmesonde 6 am unteren Ende der Bohrung B ab. Während der Tauchfahrt werden in der Sonde in den vorgewählten Zeitintervallen (Δt) Zeit-, Druck- und Temperaturwerte erfasst.

Bei einer reinen zeitgesteuerten Messung werden die gemessenen Datenwerte unmittelbar in den Speicherelementen 43 aufgezeichnet. Bei einer druck- oder temperaturgesteuerten Messung werden entsprechend die vorgewählten Schwellwerte mit den gemessenen Werten verglichen und nur bei Überschreiten der Schwellwerte in den EEPROM's 43 abgespeichert. Dabei wird stets neben dem Temperaturwert der Druckwert und die Zeit aufgezeichnet.

Beim Erreichen des U-förmigen Fußes 63 steht die absinkende Bohrlochsonde 100 auf. Nach Ablauf einer ausreichenden Wartezeit wird dann über die Ausspülvorrichtung 8 mittels Pumpe 81 der zweite Strang 62 der Erdwärmesonde 6 über Druckleitung 83 Druck beaufschlagt, so dass eine Gegenströmung vom zweiten Strang 62 in den ersten Strang 61 der Erdwärmesonde 6 entsteht und die am U-förmigen Fuß 63 aufstehende Bohrlochsonde 100 durch den ersten Strang 61 zurückgespült wird.

Nach einiger Zeit erreicht die Bohrlochsonde 100 die Auffangvorrichtung 7 und dort das erweiterte Auffangvolumen 71, aus dem die Sonde 100 manuell entnehmbar ist. Ein Temperatur-Tiefenprofil kann mit diesem Verfahren in weniger als 1 Stunde gemessen werden,

Nunmehr wird die Bohrlochsonde 100 geöffnet und zum Auslesen der in den EEPROM-Speicherelementen 43 aufgenommenen Messdaten über die RS232-Schnittstelle 49 an einen Computer angeschlossen.

Zur Auswertung wird aus den parallel aufgezeichneten Temperatur- und Druckwerten durch Umrechnung der Druckwerte in Tiefen ein Temperatur-Tiefen-Profil erzeugt. Entsprechend können aus diesem Temperatur-TiefenProfil, bevorzugt mit Verknüpfung von Labormessungen an Bohrproben aus dieser Bohrung, Wärmeleitfähigkeiten im geologischen Schichtprofil sowie der terrestrische Wärmefluss hergeleitetet werden.

Dabei ist es möglich, die Wärmeleitfähigkeiten im geologischen Schichtprofil der mit dieser Präzisions-Temperaturmessung erfassten Bohrungen sehr detailliert darzustellen. Hierzu wird der geothermische Gradient, dessen Variation mit der Tiefe nun mit noch nie dagewesener Präzision bestimmt werden kann, herangezogen. Die Messwerte können zur Optimierung von Erdwärmesondenanlagen während der Ausführung der Bohrungen verwendet werden.

Ferner ist mit der dargestellten Messmethode eine indirekte Bestimmung der in-situ Wärmeleitfähigkeit an im Labor schwierig zu messenden Formationen (Lockergesteine, Tonsteine, Mergel) aus Wärmefluss und Temperaturgradient möglich. Dabei werden aus dem Temperaturprofil schichtweise die lokalen Temperaturgradienten bestimmt (ΔTᵢ: Temperaturgradient des Tiefenbereichs i). Mit Hilfe des für den Bohrstandort gültigen terrestrischen Wärmefluss (q; aus Kartenwerken bestimmbar) kann dann für jeden Tiefenbereich der dazugehörige Wärmeleitfähigkeitswert λᵢ berechnet werden: λᵢ = q/ΔTᵢ. Die hochauflösende Temperaturmessung erlaubt dabei eine lithologische Gliederung des Bohrprofils anhand der gemessenen geothermischen Parameter.

### Bezugszeichenliste

- 1: Druckgehäuse
- 10: Zwischenrohr
- 1 1: O-Ring-Dichtung
- 100: Bohrlochsonde, Fischsonde

- 2: Messkopf
- 20: Handhabungsöse, thermische Isolation
- 21: Drucksensor
- 22: Temperatursensor

- 3: Gehäuse
- 30: Handhabungsöse
- 31: Batterie

- 4: elektrische Schaltung
- 40: DC/DC-Konverter
- 41: Mikroprozessor
- 42: Zeitbasis
- 43: Speicherelement, EEPROM
- 44: A/D-Wandler
- 45: Analog Switch
- 46: Spannungsanpassung
- 47: Reedkontakt
- 48: Akustiksignalgeber
- 49: RS232-Schnittstelle

- 6: Erdwärmesonde, Bohrlochwärmetauscher
- 61: erster Strang
- 62: zweiter Strang
- 63: U-förmiger Fuß

- 7: Auffangvorrichtung
- 71: Auffangvolumen

- 8: Ausspülvorrichtung
- 81: Pumpe
- 82: Saugleitung
- 83: Druckleitung

- B: Bohrloch
- F: Füllmaterial
- U: Untergrund

## Patentansprüche

1. Verfahren zur Messung der Temperatur oder anderen Größen mit einer kabellosen Bohrlochsonde in mit Flüssigkeit, insbesondere Wasser, gefüllten, U-förmigen Erdwärmesonden mit den Schritten
- Starten des Messaufnahmeprogramms der Bohrlochsonde,
- Einführen der Bohrlochsonde in einen Strang der U-förmigen Erdwärmesonde,
- freies Absinken lassen der Bohrlochsonde bis zum U-förmigen Fuß der Erdwärmesonde,
- Aufnehmen von Temperaturmesswerten oder anderen Messwerten mit der Bohrlochsonde in der Flüssigkeit während des freien Absinkens und
- anschließendes Ausspülen der kabellosen Bohrlochsonde durch Druckbeaufschlagung des anderen Stranges der U-förmigen Erdwärmesonde.

2. Verfahren nach Anspruch 1, **dadurch gekennzeichnet, dass** die Temperatur temperaturabhängig, bevorzugt in gleichen, vorbestimmten Temperaturintervallen, aufgezeichnet wird.

3. Verfahren nach Anspruch 2, **dadurch gekennzeichnet, dass** die Temperatur in gleichen, kurzen Zeitintervallen gemessen und nur bei einer Temperaturveränderung größer eines vorbestimmten Schwellwertes (ΔT) aufgezeichnet wird.

4. Verfahren nach Anspruch 1, **dadurch gekennzeichnet, dass** die Temperatur druckabhängig, bevorzugt in gleichen, vorbestimmten Druckintervallen, aufgezeichnet wird.

5. Verfahren nach Anspruch 4, **dadurch gekennzeichnet, dass** der Druck in gleichen, kurzen Zeitintervallen gemessen wird und die dabei gemessene Temperatur nur aufgezeichnet wird, wenn die Druckänderung einen vorbestimmten Schwellwert (Δp) überschritten hat.

6. Verfahren nach einem der vorangehenden Ansprüche, **dadurch gekennzeichnet, dass** die Messdaten digital mit einer vorbestimmten Abtastrate von 1 s bis 255 s erfasst werden.

7. Verfahren nach einem der vorangehenden Ansprüche, **dadurch gekennzeichnet, dass** neben der Temperatur oder anderen Messwerten die Zeit und der Druck aufgezeichnet werden.

8. Bohrlochsonde (100) für Messung der Temperatur oder anderen Größen in mit Flüssigkeit, insbesondere Wasser, gefügten U-förmigen Erdwärmesonden (6), insbesondere zur Durchführung des Verfahrens nach einem der Ansprüche 1 bis 7, mit einem druckfesten Gehäuse (1) und darin angeordnet wenigstens einem Sensor zur Messwerterfassung, insbesondere Temperatursensor (22), wenigstens einem Drucksensor (21), einem Zeitgeber (42), wenigstens einem Datenspeicher (43) sowie einer internen Stromversorgung (31), **dadurch gekennzeichnet dass** die Bohrlochsonde (100) keine Kabelverbindung zur Oberfläche hat und ein Gewicht aufweist, das geringfügig größer als die durch das Gehäuse (1) verdrängte Flüssigkeit ist, womit die Bahrlochsonde (100) frei in einem Strang (61) der U-förmigen Erdwärmesonde (6) absinkend ausgebildet ist.

9. Bohrlochsonde nach Anspruch 8, **dadurch gekennzeichnet, dass** Justiergewichte zur bedarfsweisen Befestigung am Gehäuse (1) der Bohrlochsonde (100) vorgesehen sind.

10. Bohrlochsonde nach Anspruch 8 oder 9, **dadurch gekennzeichnet, dass** im Gehäuse (1) wenigstens ein magnetisch von der Außenseite betätigbarer Schalter (47) zur Steuerung der Bohrlochsonde (100) vorgesehen ist.

11. Bohrlochsonde nach Anspruch 8, 9 oder 10, **dadurch gekennzeichnet, dass** eine Schnittstelle (49) an einer dem Datenspeicher (43) zugeordneten elektrischen Schaltung (4) vorgesehen ist, an die bedarfsweise ein Rechner zur Datenübertragung anschließbar ist.

12. Ausspülanordnung mit einer Auffangvorrichtung (7) für eine Bohrlochsonde (100) nach einem der Ansprüche 8 bis 11 zum Auffangen der Bohrlochsonde (100) beim Ausspülen nach Anspruch 1, mit einem einen gegenüber dem Durchmesser des einen Strangs (61) der U-förmigen Erdwärmesonde (6) vergrößerten Querschnitt aufweisenden, oben offenen Auffangvolumen (71), das auf diesem Strang (61) aufsetzbar ist, wobei im unteren Abschnitt des Auffangvolumens (71) eine Saugleitung (82) angeschlossen ist, die Flüssigkeit einer Pumpe (81) zuführt, dessen Druckleitung (83) an den anderen Strang (62) der U-förmigen Erdwärmesonde (6) angeschlossen ist.

## Claims

1. Method for measuring the temperature or other quantities using a cableless borehole probe in U-shaped geothermal probes filled with liquid, in particular water, having the steps of
- starting the measurement pick-up program of the borehole probe,
- inserting the borehole probe into one leg of the U-shaped geothermal probe,
- allowing the borehole probe to sink freely to the U-shaped foot of the geothermal probe,
- picking up temperature measurement values or other measurement values using the borehole probe in the liquid during the free sinking and
- subsequently flushing out the cableless borehole probe by applying pressure to the other leg of the U-shaped geothermal probe.

2. Method according to Claim 1, **characterised in that** the temperature is recorded temperature-dependently, preferably at equal, predetermined temperature intervals.

3. Method according to Claim 2, **characterised in that** the temperature is measured at equal, short time intervals and is recorded only in the event of a temperature change greater than a predetermined threshold value (ΔT).

4. Method according to Claim 1, **characterised in that** the temperature is recorded pressure-dependently, preferably at equal, predetermined pressure intervals.

5. Method according to Claim 4, **characterised in that** the pressure is measured at equal, short time intervals and the temperature measured while doing so is only recorded when the pressure change has exceeded a predetermined threshold value (Δp).

6. Method according to one of the preceding claims, **characterised in that** the measurement data are acquired digitally at a predetermined sampling rate of 1 s to 255 s.

7. Method according to one of the preceding claims, **characterised in that**, besides the temperature or other measurement values, the time and the pressure are recorded.

8. Borehole probe (100) for measuring the temperature or other quantities in U-shaped geothermal probes (6) filled with liquid, in particular water, in particular for carrying out the method according to one of Claims 1 to 7, having a pressure-proof housing (1) and, arranged therein, at least one sensor for measurement value acquisition, in particular a temperature sensor (22), at least one pressure sensor (21), a timer (42), at least one data memory (43) and an internal power supply (31), **characterised in that** the borehole probe (100) has no cable connection to the surface and has a weight which is slightly greater than the liquid displaced by the housing (1), whereby the borehole probe (100) is designed to sink freely in one leg (61) of the U-shaped geothermal probe (6).

9. Borehole probe according to Claim 9, **characterised in that** adjusting weights are provided for fastening to the housing (1) of the borehole probe (100), as required.

10. Borehole probe according to Claim 8 or 9, **characterised in that** at least one switch (47) actuable magnetically from the outside is provided in the housing (1) for control of the borehole probe (100).

11. Borehole probe according to Claim 8, 9 or 10, **characterised in that** an interface (49) is provided on an electric circuit (4) assigned to the data memory (43), to which interface a computer can be connected for data transmission, as required.

12. Flushing-out arrangement having a receiving device (7) for a borehole probe (100) according to one of Claims 8 to 11 for receiving the borehole probe (100) during the flushing-out according to Claim 1, having a receiving volume (71) which is open at the top and has a larger cross-section than the diameter of the one leg (61) of the U-shaped geothermal probe (6) and which can be mounted on this leg (61), there being connected in the lower section of the receiving volume (71) a suction line (82) which supplies liquid to a pump (81), the pressure line (83) of which is connected to the other leg (62) of the U-shaped geothermal probe (6).

## Revendications

1. Procédé pour mesurer la température ou d'autres grandeurs avec une sonde de trou de forage sans fil dans un capteur de chaleur géothermique en forme de U rempli d'un liquide, notamment d'eau, avec les étapes suivantes :
- démarrer le programme d'enregistrement des mesures de la sonde de trou de forage,
- introduire la sonde de trou de forage dans une branche de la sonde de chaleur géothermique en forme de U,
- laisser descendre librement de la sonde de trou de forage jusqu'au pied en forme de U de la sonde de chaleur géothermique,
- enregistrer les valeurs de température ou d'autres grandeurs avec la sonde de trou de forage dans le liquide durant la descente libre,
- expulser ensuite la sonde de trou de forage sans fil en appliquant une pression dans l'autre branche de la sonde de chaleur géothermique en forme de U.

2. Procédé selon la revendication 1, **caractérisé en ce que** la température est enregistrée en fonction de la température, de préférence à des intervalles de température réguliers prédéfinis.

3. Procédé selon la revendication 2, **caractérisé en ce que** la température est mesurée à des intervalles réguliers courts et n'est enregistrée que dans le cas où le changement de température dépasse une valeur seuil prédéfinie (ΔT).

4. Procédé selon la revendication 1, **caractérisé en ce que** la température est enregistrée en fonction de la pression, de préférence à des intervalles de pression réguliers prédéfinis.

5. Procédé selon la revendication 4, **caractérisé en ce que** la pression est mesurée à des intervalles réguliers courts et la température mesurée à ce moment-là n'est enregistrée que dans le cas où le changement de pression dépasse une valeur seuil (ΔP).

6. Procédé selon l'une des revendications précédentes, **caractérisé en ce que** les données de mesure sont saisies de façon numérique avec une fréquence de saisie comprise entre 1 s et 255 s.

7. Procédé selon l'une des revendications précédentes, **caractérisé en ce que**, outre la température ou d'autres valeurs de mesure, le temps et la pression sont enregistrés.

8. Sonde de trou de forage (100) mesurer la température ou d'autres grandeurs dans des capteurs de chaleur géothermique (6) en forme de U rempli d'un liquide, notamment d'eau, notamment pour la mise en oeuvre du procédé selon l'une des revendications 1 à 7, avec un boîtier (1) résistant à la pression à l'intérieur duquel est placé au moins un capteur pour la saisie de valeurs de mesure, notamment un capteur de température (22), avec au moins un capteur de pression (21), un générateur de rythme (42), au moins une mémoire de données (43) ainsi qu'une alimentation interne en courant (31), **caractérisée en ce que** la sonde de trou de forage (100) n'a pas de câble de liaison vers la surface et présente un poids à peine supérieur que le liquide déplacé par le boîtier (1), la sonde de trou de forage (100) étant donc formée pour pouvoir descendre librement dans une branche (61) de la sonde de chaleur géothermique (6) en forme de U.

9. Sonde de trou de forage selon la revendication 8, **caractérisée en ce que** des poids de réglage sont prévus pour être fixés en cas de besoin au boîtier (1) de la sonde de trou de forage (100).

10. Sonde de trou de forage selon la revendication 8 ou 9, **caractérisée en ce que** dans le boîtier (1) il est prévu au moins un interrupteur (47) magnétique pouvant être actionné depuis le côté extérieur pour commander la sonde de trou de forage (100).

11. Sonde de trou de forage selon la revendication 8, 9 ou 10, **caractérisée en ce qu'**une interface (49) est prévue sur un circuit électrique (4) associé à la mémoire de données (43) sur laquelle peut être raccordé en cas de besoin un calculateur pour le transfert de données.

12. Dispositif d'expulsion avec un dispositif collecteur (7) pour une sonde de trou de forage (100) selon l'une des revendications 8 à 11, pour attraper la sonde de trou de forage (100) lors de l'expulsion selon la revendication 1, avec un volume collecteur (71) ouvert vers le haut présentant une section agrandie par rapport au diamètre de l'une des branches (61) de la sonde de chaleur géothermique (6) en forme de U, lequel volume collecteur peut être posé sur cette branche (61), une conduite d'aspiration (82) étant raccordée dans la section inférieure du volume collecteur (71) qui alimente en liquide une pompe (81) dont la conduite de refoulement (83) est raccordée à l'autre branche (62) de la sonde de température géothermique (8) en forme de U.
